# FASCICULE DE BREVET EUROPEEN

(11) **EP 2 626 881 B1**
(45) Date de publication et mention de la délivrance du brevet: **03.05.2017**
(21) Numéro de dépôt: 13305090.6
(22) Date de dépôt: 25.01.2013
(51) Int. Cl.: H01H 83/14, H02H 3/33, H02H 1/00

(54) **Procédé et dispositif de sécurité électrique par fuite à la terre**
Elektrisches Sicherheitsverfahren und -vorrichtung für Erdschluss
Method and device for electrical safety by earth leakage

(30) Priorité: 09.02.2012 FR 1251194
(43) Date de publication de la demande: 14.08.2013
(73) Titulaire: Hager-Electro SAS (Société par Actions Simplifiée), 67210 Obernai (FR)
(72) Inventeur: Kalischek, Nicolas, 67210 Bernardswiller (FR)
(74) Mandataire: Nuss, Laurent

(56) Documents cités:
- WO-A1-00/11696
- WO-A1-2009/089994
- US-A- 5 195 009
- US-A- 5 917 686

## Description

Le domaine de la présente invention est celui des installations électriques pour le bâtiment, et, plus particulièrement des équipements et procédés ayant une fonction de sécurité. L'invention a ainsi pour objet un procédé de surveillance d'un circuit électrique, ainsi qu'un dispositif pour la mise en oeuvre de ce procédé. Ce dispositif peut être intégré comme composant d'au moins un appareil électrique du bâtiment.

WO 2009/089994 divulgue un équipement surveillant la circulation électrique de sorte à identifier des caractéristiques représentatives d'un défaut prédéfini. Dès lors qu'un défaut est identifié, une dérivation électrique d'un disjoncteur différentiel est réalisée pour l'une des lignes électriques le traversant. Un déséquilibre est ainsi créé, et le disjoncteur différentiel ouvre l'alimentation électrique.

Une telle réalisation présente de nombreux inconvénients. Le dispositif surveillant l'électricité et fermant la dérivation électrique doit préférentiellement être monté à proximité du disjoncteur différentiel, puisqu'il doit pouvoir être relié en parallèle du disjoncteur différentiel de sorte à réaliser l'éventuelle dérivation. De plus, le recours à une pluralité de tels équipements dans une installation électrique, chacun d'eux ayant un rôle de protection pour une partie avale de l'installation électrique, est très peu pratique, puisque chacun d'eux doit être relié à l'amont du disjoncteur différentiel, ce qui complique le montage des appareils électriques mais aussi la mise en place des câbles dans le bâtiment. Un tel équipement semble donc approprié pour surveiller le comportement de toute l'installation électrique et transformer une situation dangereuse en un défaut auquel le disjoncteur différentiel est sensible. Il est peu commode d'adapter ce principe à une surveillance d'une partie seulement de l'installation électrique. En outre, la mise en place d'un tel équipement ne peut se faire sans intervention au niveau du disjoncteur différentiel, ce qui nécessite des compétences particulières.

US 5 917 686 divulgue un montage dans lequel des fuites à la terre sont détectées et provoquent la fermeture de commutateurs qui conditionnent l'alimentation électrique de bobines de contact.

La présente invention a pour but de pallier au moins une partie et préférentiellement tous ces inconvénients, et vise notamment à proposer un procédé et équipement de sécurité électrique simple, peu couteux, facile à mettre en place, facile à monter et à câbler, exploitant l'équipement de coupure d'un appareil de coupure existant, tel qu'un disjoncteur différentiel, et ne nécessitant pas d'intervention auprès de cet appareil de coupure.

A cet effet, l'invention a pour objet un procédé de surveillance d'un circuit électrique comprenant une ligne de terre, une ligne de neutre et au moins une ligne de phase, procédé comprenant des étapes consistant à relever le fonctionnement dudit circuit électrique, et à détecter un défaut sur la base du fonctionnement relevé.

Ce procédé est caractérisé en ce qu'il comprend, en outre, une étape, mise en oeuvre dès lors qu'un défaut est détecté, et consistant à fermer une communication électrique provoquant un déséquilibre par une fuite à la terre.

L'invention a aussi pour objet un dispositif de sécurité électrique pour la mise en oeuvre d'un tel procédé, formant un circuit électrique comprenant une ligne de terre, une ligne de neutre et au moins une ligne de phase, ledit dispositif comprenant
- au moins un moyen de mesure apte à relever le fonctionnement dudit circuit électrique, notamment à mesurer une tension, un courant, et/ou une température,
- au moins un moyen de commutation piloté,
- un calculateur, tel qu'un microprocesseur, apte à piloter le au moins un moyen de commutation dès lors qu'un défaut est identifié sur la base du résultat de mesure. Ce dispositif est caractérisé en ce que
le au moins un moyen de commutation relie électriquement la ligne de terre avec la ligne de neutre ou avec l'une des lignes de phase et est monté de façon à être apte à fermer une communication électrique provoquant un déséquilibre par une fuite à la terre.

L'invention a aussi pour objet un consommateur électrique, un dispositif de transmission électrique ainsi qu'une installation électrique comprenant un tel dispositif de sécurité.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :

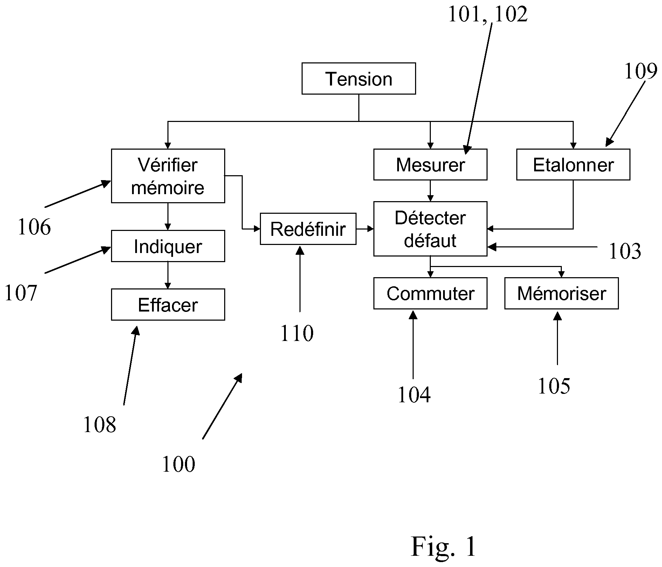

- la figure 1 illustre un procédé selon un mode de réalisation de l'invention, et

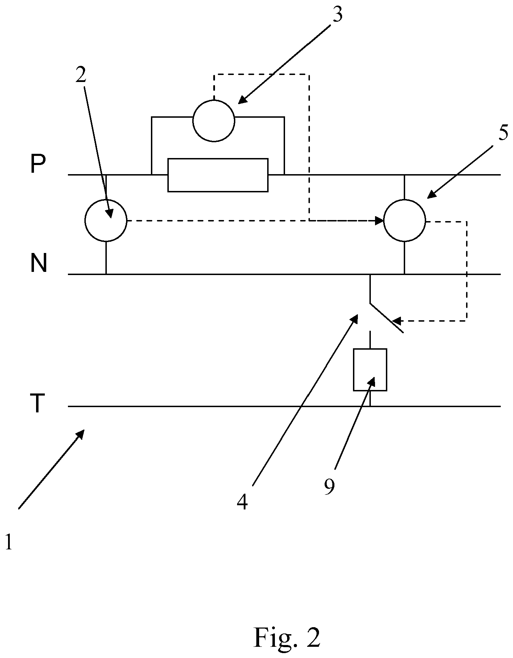

- la figure 2 illustre un dispositif selon un mode de réalisation de l'invention.

L'invention a donc tout d'abord pour objet un procédé de surveillance 100 d'un circuit électrique comprenant une ligne de terre, une ligne de neutre et au moins une ligne de phase, procédé comprenant des étapes consistant à relever le fonctionnement dudit circuit électrique, et à détecter un défaut 103 sur la base du fonctionnement relevé. Le procédé de surveillance 100 est donc compatible avec un circuit monophasé ou triphasé.

Selon l'invention, le procédé de surveillance 100 comprend, en outre, une étape, mise en oeuvre dès lors qu'un défaut est détecté, et consistant à fermer une communication électrique 104 provoquant un déséquilibre par une fuite à la terre.

L'intérêt est notamment de pouvoir utiliser la fonction d'ouverture électrique d'un appareil de coupure du type disjoncteur différentiel, mais pour des défauts auxquels un tel appareil n'est pas sensible. Lorsqu'il est estimé que la situation est dangereuse et donc dès lors qu'un défaut est détecté, une fuite à la terre est générée, ce qui a pour effet de faire déclencher le disjoncteur différentiel. Le procédé de surveillance 100 permet donc de transformer un défaut prédéfini et auquel l'appareil de coupure, en l'occurrence un disjoncteur différentiel, n'est pas sensible, en un défaut auquel ce dernier est sensible. Cela permet donc d'éviter la fourniture d'un appareil de coupure supplémentaire pour réagir à l'apparition dudit défaut prédéfini dans le circuit électrique surveillé. Dans des modes de réalisation particuliers, un seul et même appareil électrique peut comprendre à la fois dispositif de mise en oeuvre du procédé décrit ci-dessus et un élément formant disjoncteur différentiel : rallonge électrique, consommateur électrique, dispositif de transmission électrique du type socle mural, etc.

Un des intérêts de transformer le défaut prédéfini en une fuite à la terre est que créer artificiellement un défaut de fuite à la terre est plus simple et moins risqué que de créer un autre défaut auquel un autre appareil de coupure est sensible, comme, par exemple, une surintensité pour un disjoncteur de surcharge classique.

L'avantage d'avoir recours à un courant de fuite à la terre est donc qu'un tel défaut correspond exactement à la situation provoquant le déclenchement d'un disjoncteur différentiel et qu'il n'est pas nécessaire, pour surveiller le circuit électrique, qui peut ne former qu'une partie locale de l'installation électrique, d'intervenir au niveau du disjoncteur différentiel en y installant en éventuelle dérivation. Créer un déséquilibre en réalisant, comme dans WO 2009/089994, une dérivation du moyen de détection de déséquilibre, généralement un tore dans lequel passent à la fois le neutre et la au moins une ligne de phase, nécessite d'intervenir au niveau du disjoncteur différentiel, alors que réaliser, comme dans l'invention, un déséquilibre par une fuite à la terre peut être aisément réalisé à n'importe quel endroit de l'installation électrique, puisqu'il est simplement nécessaire, dans le circuit surveillé, de mettre en connexion électrique la ligne de terre avec la ligne de neutre, ou la au moins une ligne de phase.

Fermer une communication électrique 104 consiste donc à relier électriquement, notamment, comme il sera décrit plus loin, au travers d'une résistance électrique, la ligne de terre avec, par exemple, la ligne de neutre ou avec l'unique ligne de phase lorsque le circuit électrique surveillé par le procédé de surveillance 100 est monophasé, ou avec l'une des lignes de phase si ledit circuit est polyphasé, notamment triphasé. Cette ligne de phase peut alors être soit l'une quelconque des lignes de phase, soit la ligne de phase pour laquelle le défaut a été identifié.

Identifier la tension 101 pour un circuit monophasé se fait préférentiellement simplement en relevant la tension entre l'unique ligne de phase et la ligne de neutre. Dans le cas d'un circuit triphasé, identifier la tension 101 se fait en relevant trois tensions, par exemple deux entre les trois phases et une entre une phase et le neutre. Les tensions entre chaque phase et le neutre peuvent se calculer à partir de trois mesures de tension différentes.

Dans des modes de réalisation particuliers, relever le fonctionnement du circuit électrique consiste à caractériser la ligne de phase ou au moins une des lignes de phase, et notamment à identifier la tension 101 entre la ligne de phase caractérisée et la ligne de neutre et à identifier l'intensité 102 qui circule dans la ligne de phase caractérisée,
détecter un défaut 103 consistant à détecter un défaut 103, pour la ligne de phase, sur la base de ladite tension et de ladite intensité,
fermer une communication électrique 104 consistant à fermer une communication électrique 104 entre la ligne de terre et, soit l'unique ligne de phase, soit l'une quelconque des lignes de phase, soit la ligne de phase pour laquelle un défaut a été détecté, soit la ligne de neutre.

Identifier l'intensité 102 qui circule dans une ligne de phase peut se faire en relevant, par exemple, la tension aux bornes d'une résistance connue, prévue directement dans la ligne de phase.

Détecter un défaut 103 consiste alors essentiellement à interpréter les valeurs de tension et de courant relevées pour en déduire ou non l'occurrence d'un défaut. Par exemple, si le courant est plus élevé qu'un seuil prédéfini, il peut être conclu qu'un défaut est détecté. Il s'agit donc ici de comparer les caractéristiques relevées pour l'électricité circulant avec des caractéristiques particulières, qui sont estimées comme représentatives d'un défaut, d'un risque électrique. Différents types de défauts peuvent être envisagés, par exemple :
- une lente diminution de la tension identifiée pour la ligne de phase caractérisée alors que du courant circule peut être considérée comme représentative d'un échauffement des composants électriques. Dans ce cas, la détection d'un défaut 103 intègre donc la détection d'une lente diminution de la tension identifiée, alors que de l'intensité est détectée, et considère une telle diminution comme un défaut ;
- une chute brutale de la tension identifiée, simultanément à une élévation brutale de l'intensité, peut être considérée comme représentative d'un arc électrique. Il est donc avantageux d'associer un tel phénomène électrique à un défaut. Dans ce cas, la détection d'un défaut 103 intègre la détection d'une diminution brutale de la tension identifiée, simultanément à une élévation brutale de l'intensité, et considère cette diminution comme un défaut ;
- une lente diminution de la tension, alors qu'aucune intensité ne circule peut être considéré comme représentant un défaut électrique en amont ou sur la même branche de l'installation, au niveau, par exemple, d'un socle électrique qui délivre de l'électricité. Dans ce cas, la détection d'un défaut 103 intègre la détection d'une lente diminution de la tension alors qu'aucune intensité n'est détectée, et la considère comme un défaut.

La détection de défaut 103 peut donc, bien entendu, être sensible à plus d'une situation.

Le procédé de surveillance 100 utilise une partie de l'énergie circulant dans le circuit surveillé, celle-ci devenant nulle dès lors que l'appareil de coupure amont, disjoncteur différentiel, a stoppé l'alimentation électrique suite à l'apparition d'une fuite à la terre provoquée par la fermeture de la communication électrique 104. Le procédé n'est donc a priori plus alimenté par le circuit surveillé dès la fermeture de la communication électrique 104.

Selon une caractéristique additionnelle possible, le procédé de surveillance 100 comprend une étape consistant à indiquer 107 qu'un défaut a été détecté, notamment en déplaçant une pièce de couleur, en émettant un signal sonore ou lumineux, réalisée avant ou après l'étape consistant à fermer la communication électrique 104.

Indiquer 107 qu'un défaut a été détecté peut consister, comme sur un disjoncteur de surcharge, à déplacer une pièce de couleur, au quel cas indiquer 107 pourrait être réalisé avant de fermer la communication électrique 104. La pièce de couleur devrait donc être déplacée, après quoi la communication électrique serait fermée 104, ce qui aura pour effet de stopper la circulation d'électricité. Dans tous les cas où l'électricité qui circule est elle-même utilisée pour indiquer 107 qu'un défaut a été détecté, il est évidemment préférable d'indiquer 107 avant de fermer la communication électrique 104, après quoi aucune électricité ne circule.

Indiquer 107 peut aussi être réalisé après avoir fermé la communication électrique 104, au quel cas il est nécessaire de mémoriser l'occurrence d'un défaut. Indiquer 107 qu'un défaut a été détecté peut être préférentiellement réalisé après avoir refermé le circuit électrique en commutant à nouveau l'appareil de coupure, c'est à dire lorsque de l'électricité peut à nouveau circuler et que le procédé de surveillance 100 est redémarré.

Ainsi, le procédé de surveillance 100 comprend une étape consistant à mémoriser 105 un défaut dans une mémoire, telle que sauvegarder, dans une mémoire, des données de tension et d'intensité mesurées représentatives du défaut, ou encore placer une mémoire dans un état représentatif de l'occurrence d'un défaut, et ce préférentiellement avant de fermer la communication électrique 104. Cela permet donc de mémoriser 105 la détection d'un défaut avant de fermer la communication électrique 104, cette dernière étape ayant pour effet de stopper la circulation d'énergie électrique et donc d'empêcher aussi le fonctionnement des composants mettant en oeuvre le procédé et nécessitant cette circulation d'énergie électrique. La cessation de la circulation d'énergie électrique n'a donc aucun impact sur la mémorisation 105. La mémorisation 105 peut avoir lieu uniquement si un défaut est détecté 103. Si ce sont les données mesurées qui sont mémorisées, il sera nécessaire de les interpréter pour conclure qu'un défaut avait été détecté avant la remise en marche. Si c'est une information directement représentative d'un défaut, comme une donnée binaire indiquant si oui ou non il était nécessaire de stopper l'alimentation électrique, il n'y aura pas besoin d'interpréter.

Dans tous ces cas, l'état de l'éventuelle mémoire est pris en compte pour éventuellement indiquer 107 qu'un défaut a eu lieu avant la mise hors circuit. En effet, le procédé de surveillance 100 comprend, en outre, une étape consistant à vérifier l'état 106 de la mémoire, réalisée notamment dès lors que l'apparition d'une tension est identifiée, l'étape consistant à indiquer 107 qu'un défaut a été détecté étant réalisée en fonction des informations de ladite mémoire, et notamment aussi une étape consistant à effacer 108 ladite mémoire, automatiquement ou sur commande de l'utilisateur, par exemple avec un bouton ou une télécommande. Ainsi, dès que le disjoncteur différentiel est remis en marche et que l'électricité circule à nouveau, une tension non nulle est identifiée 101, ce qui démarre à nouveau le procédé de surveillance 100. L'état de la mémoire est alors vérifié 106, et, si des données relatives à un défaut y sont mémorisées, l'occurrence d'un défaut est indiquée 107. Comme il sera décrit plus loin, les moyens de mesure de tension et de courant, ainsi que la mémoire sont préférablement intégrés dans un seul et même appareil électrique, tel qu'un appareil de transmission électrique du type socle électrique ou autre, voire un consommateur électrique.

Pour éviter d'indiquer 107 un défaut alors que le déclenchement du disjoncteur différentiel a été provoqué par autre chose que la détection d'un défaut 103, il est avantageux d'effacer le contenu de la mémoire, dès que le défaut a été indiqué 107 ou encore après qu'un temps prédéfini se soit écoulé. Ainsi, si l'alimentation électrique est stoppée puis remise en marche, aucune information présente dans la mémoire et relatif à un défaut antérieur ne sera prise en compte pour indiquer 107 par erreur que l'alimentation électrique a été stoppée à cause de la détection d'un défaut 103.

Selon une caractéristique additionnelle possible, l'étape consistant à détecter un défaut 103 tient compte des informations de la mémoire enregistrées lors de l'étape consistant à mémoriser 105, notamment afin d'augmenter la sensibilité de la détection de défaut 103. Ainsi, le procédé de surveillance 100 est de plus en plus sensible à un défaut régulièrement détecté 103. A titre d'exemple, si un défaut consistant en une valeur supérieure à un seuil prédéterminé est détecté, pour l'intensité ou la tension, par exemple, ledit seuil est diminué pour les étapes de détection 103 ultérieures. Si le défaut est une lente diminution de la tension, le seuil, consistant en une baisse de tension au bout d'un temps prédéfini, pourra, dans ce cas, être diminué. Ainsi, un défaut sera détecté, même si la tension diminue plus lentement que lors des défauts précédents. De façon générale, dès lors qu'un défaut est détecté, le seuil de déclenchement est défini comme plus proche d'une situation électrique normale que le seuil précédemment défini. Il est ainsi possible de prévenir encore plus tôt la survenue d'une situation dangereuse. Le procédé comprend ainsi une étape consistant à redéfinir le défaut 110.

Selon une caractéristique additionnelle possible, permettant de simplifier la mise en marche du procédé de surveillance 100 ainsi que la mise en service d'un dispositif de sécurité 1 le mettant en oeuvre, mais aussi de garantir que les seuils de détection sont adaptés à l'installation, le procédé de surveillance 100 comprend une étape consistant à étalonner 109 la détection de défaut 103, étalonnage 109 lors duquel des paramètres de l'électricité qui circule dans le circuit électrique sont relevés et éventuellement aussi mémorisés dans la ou une mémoire, l'étape consistant à détecter un défaut 103 tenant compte de ces paramètres.

Ainsi, lors de l'étape d'étalonnage 109, qui peut être réalisée en permanence ou de façon ponctuelle, plus ou moins régulière, les valeurs de tension et d'intensité mesurées sont prises en compte pour définir le ou les seuils utilisés dans la détection de défaut 103. En effet, la tension qui circule peut être légèrement différente de la tension normale alors que la situation électrique ne présente aucun danger. Il serait alors néfaste au fonctionnement du procédé de surveillance 100 de tenir compte de valeurs de seuil prédéfinies et inadaptées à l'installation dans laquelle le procédé de surveillance 100 est mis en oeuvre, puisque des déclenchements pourraient avoir lieu alors qu'ils ne représentent pas de situation dangereuse. L'étalonnage 109 est préférentiellement réalisé en tenant compte des caractéristiques relevées en temps normal, à savoir de la tension entre la au moins une ligne de phase et la ligne de neutre et de l'intensité qui circule dans la au moins une ligne de phase.

Toutefois, afin d'éviter de réaliser un étalonnage 109 alors que les conditions électriques ne sont pas représentatives d'une situation non dangereuse, il peut être préférable de réaliser l'étalonnage sous contrôle d'un spécialiste, capable de reconnaître que la situation électrique sera effectivement sans danger pendant toute la période d'étalonnage 109. L'étalonnage 109 peut aussi être réalisé dès lors que le procédé de surveillance 100 détecte des conditions de circulation électrique suffisamment stables dans le temps pour être considérées comme représentatives d'une situation sans risque.

L'invention a aussi pour objet un dispositif de sécurité 1 apte à mettre en oeuvre le procédé de surveillance tel que décrit ci-dessus 100, formant un circuit électrique comprenant une ligne de terre, une ligne de neutre et au moins une ligne de phase, ledit dispositif comprenant
- au moins un moyen de mesure apte à relever le fonctionnement dudit circuit électrique, notamment à mesurer une tension, un courant, et/ou une température,
- au moins un moyen de commutation 4 piloté,
- un calculateur 5, tel qu'un microprocesseur, apte à piloter le au moins un moyen de commutation 4.

Selon l'invention, le au moins un moyen de commutation 4 relie électriquement la ligne de terre avec la ligne de neutre ou avec l'une des lignes de phase et est monté de façon à être apte à fermer une communication électrique 104 provoquant un déséquilibre par une fuite à la terre. Dans des modes de réalisation privilégiés, permettant au procédé de surveillance d'être sensible à des dangers qui peuvent être identifiés par des mesures de tension et d'intensité, le au moins un moyen de mesure est apte à caractériser la ligne de phase ou au moins une des lignes de phase, et comprend ainsi, par exemple, au moins un moyen de mesure de tension 2 monté de sorte à permettre d'identifier la tension 101 entre la ligne de phase caractérisée et la ligne de neutre, voire aussi au moins un moyen de mesure d'intensité 3 monté de sorte à permettre d'identifier l'intensité 102 qui circule dans la ligne de phase caractérisée.

Le dispositif de sécurité 1 tire préférentiellement l'énergie électrique dont il a besoin des lignes qu'il surveille et dont il mesure les caractéristiques électriques, notamment de tension ou de courant.

Comme il a été décrit plus haut, dans le cas d'un circuit électrique monophasé, un seul moyen de mesure de tension 2 est nécessaire, alors que trois sont nécessaires pour une application triphasée. Le moyen de commutation 4 électrique consiste préférentiellement en un transistor ou un relais piloté. Dans le cas d'un circuit électrique polyphasé, le dispositif de sécurité 1 peut ne contenir qu'un seul moyen de commutation 4, reliant électriquement la ligne de terre avec la ligne neutre ou avec l'une des lignes de phase. Alternativement, le dispositif de sécurité 1 peut comprendre autant de moyens de commutations 4 que de lignes avec lesquelles la ligne de terre peut être reliée. Il peut être avantageux de garantir que ce soit la ligne de phase pour laquelle un défaut a été détecté qui vient être reliée avec la ligne de terre, ce qui n'est pas possible si le dispositif de sécurité 1 ne comprend qu'un seul moyen de commutation 4, puisque, dans ce cas, c'est toujours la même ligne qui est reliée à la terre.

Avantageusement, lorsque le au moins un moyen de commutation 4 relie la ligne de terre avec une autre ligne, cette mise en communication se fait au travers d'une résistance électrique apte à créer un courant de fuite à la terre d'au moins 300mA seuil auquel un disjoncteur différentiel qui doit alimenter le dispositif de sécurité 1 va stopper l'alimentation électrique.

Comme il sera encore décrit plus loin, un dispositif de sécurité 1 mettant en oeuvre le procédé de surveillance 100 décrit peut être intégralement compris dans un seul composant autonome monté à distance du disjoncteur différentiel. En outre, une installation électrique domestique peut comprendre une pluralité de tels dispositifs de sécurité 1 sans gêner le montage du disjoncteur différentiel, généralement monté en tant qu'élément d'un tableau d'alimentation électrique. Chaque dispositif de sécurité 1 surveille alors une portion de l'installation électrique complète. Il peut ainsi s'agir d'un consommateur électrique, comme un appareil électroménager, ou d'appareil de transmission d'énergie électrique comme un socle, intégrant cette fonction de génération d'un courant de fuite à la terre pour simuler un déséquilibre dès lors qu'un défaut prédéfini est détecté.

Il est donc tout à fait possible de mettre en place, dans l'installation électrique, un appareil électrique quelconque muni d'un tel dispositif de sécurité 1 comme n'importe quel autre appareil électrique similaire mais non muni de ce dispositif de sécurité 1. En effet, comme la présence dans l'appareil électrique d'un dispositif de sécurité 1 ne nécessite aucune autre connexion que le câblage de la ligne de terre, de neutre et la au moins une phase, sa mise en place se fait comme pour un autre appareil électrique. Il n'est donc pas nécessaire de faire appel à un installateur spécialement qualifié ni à des techniques de montage particulières.

Dans d'autres modes de réalisation particuliers, les différents composants du dispositif de sécurité 1 peuvent aussi être montés dans des appareils électriques différents. Par exemple, le au moins un moyen de mesure de tension 2 et le au moins un moyen de mesure d'intensité 3 peuvent être montés dans un appareil électrique de transmission, tel qu'un socle électrique, une rallonge, une prise gigogne ou autre, alors que le moyen de commutation 4 piloté ainsi que le calculateur 5 peuvent être montés dans un appareil électrique de sécurité, du type disjoncteur différentiel modulaire, bloc rapporté sur un disjoncteur, module installé dans un tableau électrique en aval du disjoncteur différentiel, etc. Des réalisations sous la forme de deux blocs électrique fonctionnels, montés dans une boîte double est par exemple envisageable.

Selon une caractéristique additionnelle possible, le dispositif de sécurité 1 comprend une mémoire, dans laquelle il est possible de mémoriser 105 un défaut ou des paramètres de l'électricité qui circule dans le circuit électrique. Il est ainsi possible de stocker des informations telles que les caractéristiques mesurées pour l'électricité qui circule, ou encore l'occurrence d'un défaut.

Selon une caractéristique additionnelle possible, permettant au dispositif de sécurité 1 d'être extrêmement rapide et donc capable de détecter des situations dangereuses s'étalant sur des durées très courtes, le calculateur 5 est un élément de logique câblée, du type processeur de signal numérique, aussi nommé DSP - Digital Signal Processor.

Comme il a déjà été souligné, l'invention peut très bien fonctionner pour un circuit monophasé comme pour un circuit polyphasé, en particulier triphasé. Ainsi, selon une caractéristique additionnelle possible, le dispositif de sécurité 1 forme un circuit électrique comprenant trois lignes de phases, une ligne de neutre, et une ligne de terre, le au moins un moyen de mesure comprenant trois moyens de mesure de tension 2, trois moyens de mesure d'intensité, un calculateur 5 et au moins un moyen de commutation 4 piloté,
chacun des moyens de mesure de tension 2 étant monté de sorte à permettre d'identifier la tension 101 entre la ligne de neutre et une ligne de phase différente,
chacun des moyens de mesure d'intensité 3 étant monté de sorte à permettre d'identifier l'intensité 102 dans une ligne de phase différente, et
le au moins un moyen de commutation 4 étant monté de sorte à fermer une communication électrique 104 entre la ligne de mise à la terre et, soit la au moins une ligne de phase, soit la ligne de neutre.

Dans certains modes de réalisation particuliers, chaque ligne de phase peut être reliée à la terre. Ainsi, le dispositif de sécurité 1 comprend trois moyens de commutation 4, chacun d'eux étant monté de sorte à fermer une communication électrique 104 entre la ligne de mise à la terre et une ligne de phase différente.

L'invention a aussi pour objet un consommateur électrique comprenant au moins un dispositif de sécurité tel que décrit. Un tel consommateur électrique simule donc un défaut de masse en créant un courant de fuite à la terre, dès lors qu'il identifie que de l'électricité qui véhicule en son sein est dangereuse. La mise en service d'un tel consommateur électrique, intégrant sa propre fonction de protection, ne nécessite absolument aucun changement de l'installation électrique. En outre, s'il n'est pas connecté à la terre, son fonctionnement n'en sera pas altéré, et seule la fonction de sécurité sera défaillante.

Enfin, les différents objets décrits ci-dessus peuvent aisément être adaptés à la circulation électrique avec plus de trois phases, en réutilisant les mêmes principes.

## Revendications

1. Procédé de surveillance (100) d'un circuit électrique comprenant une ligne de terre, une ligne de neutre et au moins une ligne de phase, procédé comprenant des étapes consistant à relever le fonctionnement dudit circuit électrique, et à détecter un défaut (103) sur la base du fonctionnement relevé,
procédé **caractérisé en ce qu'**il comprend, en outre, une étape, mise en oeuvre dès lors qu'un défaut est détecté, et consistant à fermer une communication électrique (104) provoquant un déséquilibre par une fuite à la terre.

2. Procédé de surveillance (100) selon la revendication 1, **caractérisé en ce que** relever le fonctionnement du circuit électrique consiste à caractériser la ligne de phase ou au moins une des lignes de phase, et notamment à identifier la tension (101) entre la ligne de phase caractérisée et la ligne de neutre et à identifier l'intensité (102) qui circule dans la ligne de phase caractérisée,
détecter un défaut (103) consistant à détecter un défaut (103), pour la ligne de phase, sur la base de ladite tension et de ladite intensité,
fermer une communication électrique (104) consistant à fermer une communication électrique (104) entre la ligne de terre et, soit l'unique ligne de phase, soit l'une quelconque des lignes de phase, soit la ligne de phase pour laquelle un défaut a été détecté, soit la ligne de neutre.

3. Procédé selon l'une quelconque des revendications 1 ou 2, **caractérisé en ce qu'**il comprend une étape consistant à indiquer (107) qu'un défaut a été détecté, notamment en déplaçant une pièce de couleur, en émettant un signal sonore ou lumineux.

4. Procédé selon l'une quelconque des revendications 1 à 3, **caractérisé en ce qu'**il comprend une étape consistant à mémoriser (105) un défaut dans une mémoire, telle que sauvegarder, dans une mémoire, des données de tension et d'intensité mesurées représentatives du défaut, ou encore placer une mémoire dans un état représentatif de l'occurrence d'un défaut, et ce préférentiellement avant de fermer la communication électrique (104).

5. Procédé selon les revendications 3 et 4, **caractérisé en ce qu'**il comprend, en outre, une étape consistant à vérifier l'état (106) de la mémoire, réalisée notamment dès lors que l'apparition d'une tension est identifiée, l'étape consistant à indiquer (107) qu'un défaut a été détecté étant réalisée en fonction des informations de ladite mémoire, et notamment aussi une étape consistant à effacer (108) ladite mémoire.

6. Procédé selon l'une quelconque des revendications 4 ou 5, **caractérisé en ce que** l'étape consistant à détecter un défaut (103) tient compte des informations de la mémoire enregistrées lors de l'étape consistant à mémoriser (105), notamment afin d'augmenter la sensibilité de la détection de défaut (103).

7. Procédé selon l'une quelconque des revendications 1 à 6, **caractérisé en ce qu'**il comprend une étape consistant à étalonner (109) la détection de défaut (103), étalonnage (109) lors duquel des paramètres de l'électricité qui circule dans le circuit électrique sont relevés et éventuellement aussi mémorisés dans la ou une mémoire, l'étape consistant à détecter un défaut (103) tenant compte de ces paramètres.

8. Dispositif de sécurité (1) électrique, pour la mise en oeuvre d'un procédé selon l'une quelconque des revendications 1 à 7, formant un circuit électrique comprenant une ligne de terre, une ligne de neutre et au moins une ligne de phase, ledit dispositif comprenant
- au moins un moyen de mesure apte à relever le fonctionnement dudit circuit électrique, notamment à mesurer une tension, un courant, et/ou une température,
- au moins un moyen de commutation (4) piloté,
- un calculateur (5), tel qu'un microprocesseur, apte à piloter le au moins un moyen de commutation (4) dès lors qu'un défaut est identifié sur la base du résultat de mesure, dispositif **caractérisé en ce que** le au moins un moyen de commutation (4) relie électriquement la ligne de terre avec la ligne de neutre ou avec l'une des lignes de phase et est monté de façon à être apte à fermer une communication électrique (104) provoquant un déséquilibre par une fuite à la terre.

9. Dispositif de sécurité (1) électrique selon la revendication 8, **caractérisé en ce que**
le au moins un moyen de mesure est apte à caractériser la ligne de phase ou au moins une des lignes de phase, et comprend ainsi, par exemple, au moins un moyen de mesure de tension (2) monté de sorte à permettre d'identifier la tension (101) entre la ligne de phase caractérisée et la ligne de neutre, voire aussi au moins un moyen de mesure d'intensité (3) monté de sorte à permettre d'identifier l'intensité (102) qui circule dans la ligne de phase caractérisée.

10. Dispositif selon l'une quelconque des revendications 8 ou 9, **caractérisé en ce qu'**il comprend une mémoire, dans laquelle il est possible de mémoriser (105) un défaut ou des paramètres de l'électricité qui circule dans le circuit électrique.

11. Dispositif selon l'une quelconque des revendications 8 à 10, **caractérisé en ce que** le calculateur (5) est un élément de logique câblée, du type processeur de signal numérique, aussi nommé DSP - Digital Signal Processor.

12. Dispositif selon l'une quelconque des revendications 8 à 11, **caractérisé en ce qu'**il forme un circuit électrique comprenant trois lignes de phases, une ligne de neutre, et une ligne de terre, le au moins un moyen de mesure comprenant trois moyens de mesure de tension (2), trois moyens de mesure d'intensité, un calculateur (5) et au moins un moyen de commutation (4) piloté,
chacun des moyens de mesure de tension (2) étant monté de sorte à permettre d'identifier la tension (101) entre la ligne de neutre et une ligne de phase différente,
chacun des moyens de mesure d'intensité (3) étant monté de sorte à permettre d'identifier l'intensité (102) dans une ligne de phase différente, et
le au moins un moyen de commutation (4) étant monté de sorte à fermer une communication électrique (104) entre la ligne de mise à la terre et, soit la au moins une ligne de phase, soit la ligne de neutre.

13. Dispositif selon la revendication 12, **caractérisé en ce qu'**il comprend trois moyen de commutation (4), chacun d'eux étant monté de sorte à fermer une communication électrique (104) entre la ligne de mise à la terre et une ligne de phase différente.

14. Consommateur électrique, tel qu'un équipement électrique électroménager, sanitaire, ou de chauffage, **caractérisé en ce qu'**il comprend au moins un dispositif de sécurité (1) selon l'une quelconque des revendications 8 à 13.

15. Dispositif de transmission d'énergie électrique, tel que prise gigogne, rallonge électrique, socle mural encastré ou en saillie, **caractérisé en ce qu'**il comprend au moins un dispositif de sécurité (1) selon l'une quelconque des revendications 8 à 13.

16. Installation électrique domestique, comprenant un disjoncteur différentiel apte à détecter un courant de fuite à la terre au-delà d'un seuil d'intensité, **caractérisé en ce qu'**il comprend un dispositif de sécurité (1) selon l'une quelconque des revendications 8 à 13, ledit dispositif de sécurité (1) comprenant, en outre, au moins une résistance électrique (9), connectée en série avec le au moins un moyen de commutation (4) piloté, entre les deux lignes que ce dernier peut mettre en communication, à savoir la ligne de terre et, soit la au moins une ligne de phase, soit la ligne de neutre, ladite résistance électrique (9) étant, en outre, apte à générer un courant de fuite au moins égal audit seuil d'intensité.

## Patentansprüche

1. Verfahren zur Überwachung (100) einer elektrischen Schaltung oder eines elektrischen Schaltkreises,
umfassend eine Erdleitung, eine Neutralleitung und mindestens eine Phasenleitung, wobei das Verfahren Schritte umfasst, die umfassen, die Funktion der elektrischen Schaltung festzustellen und einen Fehler (103) auf Basis der festgestellten Funktion zu erkennen,
wobei das Verfahren **dadurch gekennzeichnet ist, dass** es ferner einen Schritt umfasst, der durchgeführt wird, wenn ein Fehler erkannt wird, und der umfasst, eine elektrische Verbindung (104), die ein Ungleichgewicht durch eine Ableitung gegen die Erde hervorruft, zu schließen.

2. Verfahren zur Überwachung (100) nach Anspruch 1,
**dadurch gekennzeichnet, dass**
das Erkennen der Funktion der elektrischen Schaltung umfasst, die Phasenleitung oder mindestens eine der Phasenleitungen zu kennzeichnen, und insbesondere die Spannung (101) zwischen der gekennzeichneten Phasenleitung und der Neutralleitung zu identifizieren und die Stromstärke (102), die in der gekennzeichneten Phasenleitung zirkuliert, zu identifizieren,
wobei das Erkennen eines Fehlers (103) umfasst, einen Fehler (103) für die Phasenleitung auf Basis der Spannung und der Stromstärke zu erkennen,
wobei das Schließen einer elektrischen Verbindung (104) umfasst, eine elektrische Verbindung (104) zwischen der Erdleitung und entweder der einzigen Phasenleitung oder einer der Phasenleitungen oder der Phasenleitung, für die ein Fehler erkannt wurde, oder die Neutralleitung zu schließen.

3. Verfahren nach einem der Ansprüche 1 oder 2,
**dadurch gekennzeichnet, dass**
es einen Schritt umfasst, der umfasst anzuzeigen (107), dass ein Fehler erkannt wurde, wobei insbesondere ein Farbstück verschoben wird, wobei ein Ton- oder Lichtsignal entsandt wird.

4. Verfahren nach einem der Ansprüche 1 bis 3,
**dadurch gekennzeichnet, dass**
es einen Schritt umfasst, der umfasst, einen Fehler (105) in einem Speicher zu speichern, um zum Beispiel in einem Speicher für den Fehler repräsentative gemessene Spannungs- und Stromstärkedaten zu speichern oder auch einen Speicher in einen Zustand zu bringen, der für das Auftreten eines Fehlers repräsentativ ist, und zwar vorzugsweise, bevor die elektrische Verbindung (104) geschlossen wird.

5. Verfahren nach den Ansprüchen 3 und 4,
**dadurch gekennzeichnet, dass**
es ferner einen Schritt umfasst, der umfasst, den Zustand (106) des Speichers zu überprüfen, der insbesondere ausgeführt wird, wenn das Auftreten einer Spannung identifiziert wird, wobei der Schritt, der umfasst anzuzeigen (107), dass ein Fehler erkannt wurde, in Abhängigkeit von den Informationen des Speichers ausgeführt wird, und insbesondere auch einen Schritt umfasst, der umfasst, den Speicher zu löschen (108).

6. Verfahren nach einem der Ansprüche 4 oder 5,
**dadurch gekennzeichnet, dass**
der Schritt, der umfasst, einen Fehler (103) zu erkennen, Informationen des Speichers berücksichtigt, die während des Schrittes, der umfasst zu speichern (105), aufgezeichnet wurde, insbesondere um die Sensibilität der Fehlererkennung (103) zu erhöhen.

7. Verfahren nach einem der Ansprüche 1 bis 6,
**dadurch gekennzeichnet, dass**
es einen Schritt umfasst, der umfasst, die Fehlererkennung (103) zu kalibrieren (109), wobei bei der Kalibrierung (109) Parameter der Elektrizität, die in der elektrischen Schaltung zirkuliert, erfasst und eventuell auch in dem oder einem Speicher gespeichert werden, wobei der Schritt umfasst, einen Fehler (103) unter Berücksichtigung dieser Parameter zu erkennen.

8. Elektrische Sicherheitsvorrichtung (1) für die Umsetzung eines Verfahrens nach einem der Ansprüche 1 bis 7,
die eine elektrische Schaltung, umfassend eine Erdleitung, eine Neutralleitung und mindestens eine Phasenleitung, bildet, wobei die Vorrichtung umfasst
- mindestens ein Messmittel, das geeignet ist, die Funktion der elektrischen Schaltung festzustellen, insbesondere eine Spannung, einen Strom und/oder eine Temperatur zu messen,
- mindestens ein gesteuertes Umschaltmittel (4),
- einen Rechner (5), wie beispielsweise einen Mikroprozessor, der geeignet ist, das mindestens eine Umschaltmittel (4) zu steuern, wenn ein Fehler auf Basis des Messergebnisses identifiziert wird, wobei die Vorrichtung **dadurch gekennzeichnet ist, dass**
das mindestens eine Umschaltmittel (4) die Erdleitung elektrisch mit der Neutralleitung oder mit einer der Phasenleitungen verbindet und derart montiert ist, dass es geeignet ist, eine elektrische Verbindung (104), die ein Ungleichgewicht durch Ableitung gegen die Erde hervorruft, zu schließen.

9. Elektrische Sicherheitsvorrichtung (1) nach Anspruch 8,
**dadurch gekennzeichnet, dass**
das mindestens eine Messmittel geeignet ist, die Phasenleitung oder mindestens eine der Phasenleitungen zu kennzeichnen, und somit beispielsweise mindestens ein Spannungsmessmittel (2), das derart montiert ist, dass es die Identifikation der Spannung (101) zwischen der gekennzeichneten Phasenleitung und der Neutralleitung ermöglicht, bzw. auch mindestens ein Stromstärkemessmittel (3) umfasst, das derart montiert ist, dass es die Identifikation der Stromstärke (102), die in der gekennzeichneten Phasenleitung zirkuliert, ermöglicht.

10. Vorrichtung nach einem der Ansprüche 8 oder 9,
**dadurch gekennzeichnet, dass**
sie einen Speicher umfasst, in dem es möglich ist, einen Fehler oder Parameter der Elektrizität, die in der elektrischen Schaltung zirkuliert, zu speichern (105).

11. Vorrichtung nach einem der Ansprüche 8 bis 10,
**dadurch gekennzeichnet, dass**
der Rechner (5) ein Element einer verkabelten Logik vom Typ digitaler Signalprozessor, auch DSP - Digital Signal Processor genannt, ist.

12. Vorrichtung nach einem der Ansprüche 8 bis 11,
**dadurch gekennzeichnet, dass**
sie eine elektrische Schaltung bildet, umfassend drei Phasenleitungen, eine Neutralleitung und eine Erdleitung, wobei das mindestens eine Messmittel drei Spannungsmessmittel (2) drei Stromstärkemessmittel, einen Rechner (5) und mindestens ein gesteuertes Umschaltmittel (4) umfasst,
wobei jedes der Spannungsmessmittel (2) derart montiert ist, dass es die Identifikation der Spannung (101) zwischen der Neutralleitung und einer unterschiedlichen Phasenleitung ermöglicht,
wobei jedes der Stromstärkemessmittel (3) derart montiert ist, dass es die Identifikation der Stromstärke (102) in einer unterschiedlichen Phasenleitung ermöglicht, und
wobei das mindestens eine Umschaltmittel (4) derart montiert ist, dass es eine elektrische Verbindung (104) zwischen der Erdleitung und entweder der mindestens einen Phasenleitung oder der Neutralleitung schließt.

13. Vorrichtung nach Anspruch 12,
**dadurch gekennzeichnet, dass**
sie drei Umschaltmittel (4) umfasst, wobei jedes von ihnen derart montiert ist, dass eine elektrische Verbindung (104) zwischen der Erdleitung und einer unterschiedlichen Phasenleitung geschlossen wird.

14. Elektrischer Verbraucher, wie beispielsweise eine elektrische Haushalts-, Sanitär- oder Heizeinrichtung,
**dadurch gekennzeichnet, dass**
er mindestens eine Sicherheitsvorrichtung (1) nach einem der Ansprüche 8 bis 13 umfasst.

15. Vorrichtung zur Übertragung von elektrischer Energie, wie beispielsweise Adapterbuchse, Verlängerungskabel oder eingemauerter oder hervorstehender Wandsockel,
**dadurch gekennzeichnet, dass**
sie mindestens eine Sicherheitsvorrichtung (1) nach einem der Ansprüche 8 bis 13 umfasst.

16. Elektrische Hausanlage, umfassend einen Differentialschalter, der geeignet ist, einen Erdableitungsstrom über eine Schwelle der Stromstärke hinaus zu erkennen,
**dadurch gekennzeichnet, dass**
sie eine Sicherheitsvorrichtung (1) nach einem der Ansprüche 8 bis 13 umfasst, wobei die Sicherheitsvorrichtung (1) ferner mindestens einen elektrischen Widerstand (9), der in Serie mit dem mindestens einen gesteuerten Umschaltmittel (4) geschaltet ist, zwischen den beiden Leitungen, die dieser letztgenannte in Verbindung bringen kann, nämlich der Erdleitung und entweder der mindestens einen Phasenleitung oder der Neutralleitung umfasst, wobei der elektrische Widerstand (9) ferner geeignet ist, einen Ableitungsstrom mindestens gleich der Schwelle der Stromstärke zu erzeugen.

## Claims

1. Method (100) for monitoring an electrical circuit comprising an earth line, a neutral line and at least one phase line, said method comprising steps consisting in recording the operation of said electrical circuit and detecting a fault (103) on the basis of the recorded operation, said method being **characterised in that** it further comprises a step consisting in closing an electrical communication (104) causing an unbalance by an earth leakage, which step is implemented once a fault is detected.

2. Monitoring method (100) according to claim 1, **characterised in that** recording the operation of the electrical circuit consists in characterising the phase line or at least one of the phase lines, and particularly identifying (101) the voltage between the characterised phase line and the neutral line and identifying the intensity (102) that circulates in the characterised phase line,
detecting a fault (103) consisting in detecting a fault (103), for the phase line, on the basis of said voltage and said intensity,
closing an electrical communication (104) consisting in closing an electrical communication (104) between the earth line and either the single phase line, or any one of the phase lines, or the phase line for which a fault has been detected or the neutral line.

3. Method according to any one of claims 1 or 2, **characterised in that** it comprises a step consisting in indicating (107) that a fault has been detected, particularly by moving a coloured part, by emitting an audible or light signal.

4. Method according to any one of claims 1 to 3, **characterised in that** it comprises a step consisting in storing (105) a fault in a memory, such as saving measured voltage and intensity data representing the fault in a memory, or even placing a memory in a state that represents the occurrence of a fault, preferably before closing the electrical communication (104).

5. Method according to claims 3 and 4, **characterised in that** it further comprises a step (106) consisting in checking the status of the memory, which is particularly carried out once the appearance of a voltage is identified, the step consisting in indicating (107) that a fault has been detected being carried out as a function of information in said memory, and particularly also a step consisting in deleting (108) said memory.

6. Method according to claim 4 or 5, **characterised in that** the step consisting in detecting a fault (103) takes into account information in the memory that is recorded during the step consisting in storing (105), particularly in order to enhance the sensitivity of the fault detection (103).

7. Method according to any one of claims 1 to 6, **characterised in that** it comprises a step consisting in calibrating (109) the fault detection (103), during which calibration (109) parameters of the electricity that circulates in the electrical circuit are recorded and optionally also stored in the one or more memories, the step consisting in detecting a fault (103) taking into account these parameters.

8. Electrical safety device (1) for implementing a method according to any one of claims 1 to 7, forming an electrical circuit comprising an earth line, a neutral line and at least one phase line, said device comprising:
- at least one measurement means capable of recording the operation of said electrical circuit, particularly to measure a voltage, a current and/or a temperature;
- at least one controlled switching means (4);
- a computer (5), such as a microprocessor, that is capable of controlling the at least one switching means (4) once a fault is identified on the basis of the measurement result, which device is **characterised in that** the at least one switching means (4) electrically connects the earth line to the neutral line or to one of the phase lines and is mounted so as to be able to close an electrical communication (104) causing an imbalance by an earth leakage.

9. Electrical safety device (1) according to claim 8, **characterised in that** the at least one measurement means is capable of characterising the phase line or at least one of the phase lines and thus comprises, for example, at least one voltage measurement means (2), which is mounted so as to identify the voltage (101) between the characterised phase line and the neutral line, and possibly also at least one intensity measurement means (3), which is mounted so as to identify the intensity (102) that circulates in the characterised phase line.

10. Device according to any one of claims 8 or 9, **characterised in that** it comprises a memory, in which a fault or parameters of the electricity that circulates in the electrical circuit can be stored (105).

11. Device according to any one of claims 8 to 10, **characterised in that** the computer (5) is a wired logic item, of the Digital Signal Processor type, also called DSP.

12. Device according to any one of claims 8 to 11, **characterised in that** it forms an electrical circuit comprising three phase lines, one neutral line and one earth line, the at least one measurement means comprising three voltage measurement means (2), three intensity measurement means, one computer (5) and at least one controlled switching means (4),
each of the voltage measurement means (2) being mounted so as to identify the voltage (101) between the neutral line and a different phase line,
each of the intensity measurement means (3) being mounted so as to identify the intensity (102) in a different phase line, and
the at least one switching means (4) being mounted so as to close an electrical communication (104) between the earth line and either the at least one phase line or the neutral line.

13. Device according to claim 12, **characterised in that** it comprises three switching means (4), each being mounted so as to close an electrical communication (104) between the earth line and a different phase line.

14. Electrical consumer, such as household, sanitary or heating electrical equipment, **characterised in that** it comprises at least one safety device (1) according to any one of claims 8 to 13.

15. Electrical energy transmission device, such as an extendable socket, extension cord, recessed or projecting wall socket, **characterised in that** it comprises at least one safety device (1) according to any one of claims 8 to 13.

16. Domestic electrical installation, comprising an earth-leakage circuit breaker capable of detecting an earth leakage current beyond an intensity threshold, **characterised in that** it comprises a safety device (1) according to any one of claims 8 to 13, said safety device (1) further comprising at least one electrical resistor (9) connected in series with the at least one controlled switching means (4), between the two lines that said means can connect, namely the earth line and either the at least one phase line or the neutral line, said electrical resistor (9) further being capable of generating a leakage current that is at least equal to said intensity threshold.
